# EUROPÄISCHE PATENTSCHRIFT

(11) **EP 0 964 600 B1**
(45) Veröffentlichungstag und Bekanntmachung des Hinweises auf die Patenterteilung: **23.08.2006**
(21) Anmeldenummer: 99106761.2
(22) Anmeldetag: 03.04.1999
(51) Int. Cl.: H04Q 11/04

(54) **Vorrichtung und Verfahren zur Abbildung von Objektadressen**
Device and method for representing object addresses
Dispositif et procédé pour répresenter des adresses d'objets

(30) Priorität: 08.06.1998 DE 19825541
(43) Veröffentlichungstag der Anmeldung: 15.12.1999
(73) Patentinhaber: Tenovis GmbH & Co. KG, 60362 Frankfurt am Main (DE)
(72) Erfinder: Schickling, Berthold, 65439 Floersheim (DE)
(74) Vertreter: Tergau & Pohl Patentanwälte

(56) Entgegenhaltungen:
- WO-A-94/21069
- WO-A-97/03535
- WO-A-97/03549
- DE-A- 19 629 765

## Beschreibung

Die Erfindung betrifft eine Vorrichtung und ein Verfahren zur Ablage, zum Abruf und zur Manipulation von Objektinformationen, wobei die Objektinformationen durch Objektadressen eindeutig bestimmbaren Objekten zugeordnet sind.

### Stand der Technik

Bei der Übertragung von Signalen, beispielsweise einer Nachrichtenverbindung, in einem Asynchronus Transfer Mode (ATM) ist zur Identifikation und Durchschaltung einer ATM-Verbindung über eine oder mehrere ATM-Vermittlungseinrichtungen erforderlich, jeder Verbindung eine eindeutige Adresse zuzuordnen. Durch diese eindeutige Adresse kann die Verbindung in jedem Verbindungsabschnitt zwischen den mehreren Vermittlungseinrichtungen eindeutig identifiziert werden. Diese Adresse wird in einer Kopfzeile (Header) jeder über die ATM-Verbindung übertragenen ATM-Zelle abgelegt, so daß alle Zellen, die zu einer Verbindung gehören, auch die gleiche Adresse besitzen, und damit eine Vermittlung dieser ATM-Zellen möglich ist. Die Größe dieser Adresse ist je nach Art des Interfaces 24 oder 28 Bit (UNI = User Network Interface beziehungsweise NNI = Network Network Interface). Wird eine Verbindung über mehrere Verbindungsabschnitte, die zwischen verschiedenen ATM-Vermittlungen oder zwischen Endgerät und ATM-Vermittlung liegen, aufgebaut, so muß sichergestellt werden, daß auf jedem Verbindungsabschnitt eine Adresse nicht doppelt oder mehrfach vergeben wird. Daher muß jede ATM-Vermittlungsstelle aktuelle Informationen über die Belegung ihrer aktuellen Adressen verwalten. Das heißt, jeder ATM-Anschluß (Port) verwaltet diese Adressen in einer eigenen Datenbank, durch die er sicherstellt, daß beim Aufbau einer Verbindung keine Adresse an diesem Anschluß doppelt vergeben wird. Desweiteren werden neu angeforderte Adressen belegt beziehungsweise bei der Rückgabe freigegeben. Wird eine Verbindung über mehr als eine ATM-Vermittlungsstelle geschaltet, so wird durch einen "Master/Slave"-Mechanismus eine Synchronisation bei der Adressvergabe sichergestellt. Dabei entnimmt jede Anschlußeinheit beziehungsweise Vermittlungseinrichtung eine neue Adresse ihrer eigenen Datenbank (also aus ihrem Adressraum), solange sie keine Adresse von einer als "Master" arbeitenden anderen ATM-Vermittlungsstelle erhält. Die Adressräume der beiden ATM-Vermittlungsstellen sind also nicht synchronisiert. Eine Synchronisation wird hingegen durch einen gesetzten "Master/Slave"-Indikator im Signalisierungsprotokoll sichergestellt. Wird für eine neue Verbindung an einer Anschlußeinheit eine bestimmte Adresse erwartet, muß diese Anschlußeinheit anhand entsprechender Statuseinträge, die den Belegungszustand kennzeichnen, feststellen, ob diese Adresse bereits belegt ist und gegebenenfalls für dieser Verbindung eine neue, freie Adresse auswählen, die dann nur innerhalb der ATM-Vermittlung gültig ist, zu der sie gehört. Die Abbildung der Adresse der ankommenden Verbindung auf die neue, abgehende Verbindung wird in sogenannten "Mapping-Registern" festgelegt, so daß die abgehende Verbindung auch anhand der neuen Adresse weiterhin eindeutig identifiziert werden kann. Das "mappen" der Adressen wird im Verlauf des "Routens" der ATM-Zellen durch entsprechende HW-Bausteine durchgeführt.

Der gesamte Adressraum, der an jedem ATM-Anschluß einer ATM-Vermittlung zu jeder Zeit zur Verfügung stehen muß, beträgt aufgrund der Bit-Länge 2²⁴ = 16 777 216 Adressen an eineam UNI-Port und 2²⁸ = 268 435 456 Adressen an einem NNI-Port. Dies bedeutet jedoch nicht, daß diese Adressen alle gleichzeitig auf einem Interface benutzt werden können. Es sind hingegen nur so viele Verbindungen gleichzeitig aktiv, wie die Kapazität der ATM-Vermittlungsstelle für diesen Port zuläßt. Die Kapazität wird in der Regel durch die Hardware limitiert.

Das Dokument DE 196 29 765 offenbart ein Verfahren zur Adressreduktion in ATM-Vermittlungssystemen.

### Vorteile der Erfindung

Durch eine Vorrichtung mit den im Anspruch 1 genannten Merkmalen ist es vorteilhaft möglich, einen einfachen, schnellen und kostengünstigen Zugriff auf Objektinformationen, insbesondere Statusinformationen von ATM-Verbindungen, zu ermöglichen, wobei die Speicherverwaltung dynamisch und speicherplatzsparend arbeitet.

Durch eine Vorrichtung zur Ablage, zum Abruf und zur Manipulation von Objektinformationen, wobei die Objektinformationen durch Objektadressen eindeutig bestimmbaren Objekten zugeordnet sind, mit Ein- und Ausgabemitteln, mit einem Speicher, in dem die Objektinformationen abgelegt sind, mit einer Speicherverwaltung, die die Ablage, den Zugriff und das Löschen von Objektinformationen im Speicher steuert, wobei bei einem Zugriff auf die Objektinformationen die Objektadresse des zugreifenden Objektes durch die Speicherverwaltung segmentiert wird, um dann die einzelnen Adresssegmente auf Adressblöcke abzubilden, wobei die Adressblöcke baumförmig hierarchisch miteinander verknüpft sind und eine eindeutige Abbildung des Adresssegmentes auf ein eindeutiges Adresselement des Adressblocks erlauben, wobei in dem Adresselement Verweise auf den nächsten Adressblock und/oder Statusinformationen und/oder Objektinformationen abgelegt sind, und jede Ebene des Adressbaumes ein Adresssegment der Objektadresse darstellt, bei dem in der untersten Ebene (dem Blatt) die auszulesenden Objektinformation abgelegt sind, wobei bei einer Ablage von Qbjektinformationen die Objektadresse durch die Speicherverwaltung segmentiert wird, um den durch die Segmentierung festgelegten Pfad durch die Knoten des durch die Adressblöcke dargestellten Adressbaumes zu wählen und um im Falle der Existenz eines vollständigen Pfades im das Blatt darstellenden Adressblock die Objektinformationen abzulegen, und im Falle des Fehlens eines vollständigen Pfades von der Speicherverwaltung der Pfad durch Verkettung von Adressblöcken geschaffen wird, wobei beim einem Löschen von Objektinformationen die Speicherverwaltung die Adressblöcke aus dem die Objektadresse darstellenden hierarchischen Pfad entfernt, die keine Objektinformationen oder Verweise auf einen nächsten Adressblock aufweisen, ist es vorteilhaft möglich, daß von der Speicherverwaltung keine Objektadressen oder Adresssegmente als solche gespeichert werden. Es findet vielmehr lediglich eine Abbildung der Adresssegmente auf die Adresselemente eines Adressblocks statt.

Zur Bestimmung von freien Objektadressen sind die freien Adresselemente vorzugsweise durch einen doppelt verketteten Vektor innerhalb der Adressblöcke miteinander verbunden. Dieser Vektor wird nach dem LIFO(Last In First Out)-Verfahren verwaltet.

Die Elemente der Vektoren liegen im Speicher zusammenhängend vor und sind zusätzlich verkettet. Hierdurch wird vorteilhaft das Verfahren einer Liste beim Belegen einer Adresse mit den Vorteilen des Vektors beim Freigeben einer Adresse verbunden.

Eine bevorzugte Anwendung der erfindungsgemäßen Vorrichtung ist eine ATM-Vermittlungseinrichtung, wobei die Objekte Verbindungen zwischen ATM-Netzwerkteilnehmern sind, die Objektadressen VPI-VCI-Adressen eines Ports sind und die Objektinformationen der Status der Verbindungen sind.

Dabei unterteilt die Speicherverwaltung die VPI-VCI-Adresse in Byte Adresssegmente, wodurch die Adressblöcke für eine eindeutige Zuweisung 256 Adresselemente bereitstellen. Dies ergibt bei der Abbildung des Adressraums für UNI-Adressen (24-Bit lange VPI-VCI-Adresse) einen Adressbaum mit drei Ebenen beziehungsweise einen Adressbaum mit vier Ebenen bei NNI-Adressen (28-Bit lange VPI-VCI-Adresse).

Um den Speicherbedarf noch mehr zu senken, sind die Adresselemente den Adressblöcken vorzugsweise dynamisch zuweisbar. Dabei werden die Positionen der Adresselemente beziehungsweise Adressblöcke im Speicher nicht über physikalische Adressen bestimmt (zum Beispiel Zeiger, max 4 Byte), sondern über Handles (max 2 Byte) ermittelt. Die Verkettung der Adressblöcke erfolgt ebenfalls über Handles.

Bei einer ATM-Vermittlungseinrichtung mit mehreren Ports sind entsprechend viele Adressbäume vorgesehen, die die Adressräume der VPI-VCI-Adressen für jeden Port abbilden, wobei die Speicherverwaltung allen Adressbäumen je nach Bedarf Adressblöcke und/oder Adresselemente bereitstellt. Hierdurch gibt es eine zentrale Verwaltung aller nicht benötigten Adressblöcke und Adresselemente. Im Speicher sind jedoch mehrere Adressbäume abgebildet.

Die Speicherverwaltung optimiert den Speicherverbrauch dahingehend, daß ein mit Statusinformationen oder Adresselementen vollbelegter Adressblock entfernt wird, und eine entsprechende Information in dem hierarchisch übergeordneten Adressblock anstatt des Verweises hinterlegt wird. Die Statusinformationen müssen jedoch für alle Objekte identisch sein.

Insgesamt ist vorteilhaft, daß ein Adressblock als Vektor aufgebaut ist, der alle zu einem Adress-Segment gehörenden Adresselemente enthält. Ein solcher Adressblock enthält belegte und nicht belegte Adresselemente. Adressblöcke, bei denen keine oder alle Adresselemente belegt sind, werden aus dem hierarchischen Pfad entfernt. Um ein freies Adresselement oder einen Verweis auf einen freien hierarchisch nachgeordneten Adressblock beim Belegen einer Adresse ohne Suche zu finden, wird in einem teilweise belegten Adressblock die Identifizierung von Verweisen auf hierarchisch nachgeordnete freie Adressblöcke oder auf freie Adresselemente innerhalb des in der Hierarchie zuletzt stehenden Adressblocks in Form einer doppelt gerichteten Verkettung dieser freien Elemente geführt.

Die Verkettung dieser Elemente geschieht nicht über Speicheradressen der einzelnen Adresselemente, was prinzipiell möglich wäre, sondern über "Handles" (Indizes des Vektors in dem sie sich befinden). Damit wird weiterer Speicherplatz eingespart, da die Größe der Handles 1 Byte oder 2 Byte, die von Speicheradressen üblicherweise 4 Byte ist. Die Umrechnung von Handles zu Speicheradressen und umgekehrt beim Zugriff auf Adressblöcke oder dynamisch zugeordnete Adresselemente ist mit einer einfachen Adressarithmetik durchzuführen.

Alle Adressblöcke beziehungsweise Adresselemente die keine freien Einträge besitzen werden aus dieser Verkettung entfernt. Sie können jedoch in einer weiteren, von der Verkettung freier Adresselemente unabhängigen Verkettung innerhalb desselben Adressblocks geführt werden, die dann nur alle vollständig belegten Adresselemente miteinander verkettet. Prinzipiell ist es möglich, alle Adresselemente eines Adressblocks, die die gleichen Statusinformationen tragen, unabhängig voneinander zu verketten, um einen Zugriff auf Elemente des gleichen Status ohne Suche zu ermöglichen. Das Entfernen eines Adressblocks aus dem Hierarchiepfad ist jedoch nur dann möglich, wenn alle Statuseinträge in dem zu entfernenden Adressblock identisch sind beziehungsweise nur eine Verkettung existiert.

Beim Freigeben einer Adresse wird der Wert der Adresse selbst benutzt, um die Position des Adressblocks in der Hierarchie der Adressblöcke und das einzelne Adresselement innerhalb des Adressblockes zu identifizieren. Daher ist eine Suche nach der richtigen Position innerhalb der geordneten Hierarchie der Adressblöcke und deren Adresselemente ebenfalls unnötig.

Mit Hilfe der doppelt gerichteten Verkettung ist es möglich, die Verkettung, zum Beispiel beim Freigeben einer Adresse, so aufzubauen, daß ein LIFO-Verhalten implementiert wird. Das heißt, die zuletzt freigegebene Adresse wird bei der nächsten Belegung einer Adresse zuerst wiederverwendet. Vorteil: In speziellen HW-Bausteinen ("policing-chips"), die das "mappen" der ATM-Adressen unterstützen, ist ein erneutes Eintragen in deren "Mapping-Register" unnötig, solange sich darin noch der zuletzt verwendete Adresswert befindet und nur inaktiviert wurde. Dadurch wird Zeit, die beim erneuten Laden des zuletzt benutzten Adresswertes benötigt würde, vermieden.

Ist das LIFO-Verhalten implementiert, wird die Reihenfolge der Verkettung der freien Adresselemente innerhalb eines Adressblocks beim Freigeben einer ATM-Adresse durch die Reihenfolge der Freigabe der ATM-Adressen bestimmt und nicht durch ihren Adresswert (Position im Vektor) selbst. Da in der Regel die Reihenfolge beim Belegen von ATM-Adressen unabhängig und unterschiedlich von der Reihenfolge ihrer Freigabe ist, ist auch die Verkettung nach der Freigabe nicht mehr in dem ursprünglichen Zustand (Bildung von Schleifen in der Verkettung). Falls ein solches Verhalten unerwünscht ist, kann mit Hilfe der doppelten Verkettung bei der Freigabe einer ATM-Adresse die Verkettung der freien Elemente wieder in ihrer ursprünglichen Form aufgebaut werden.

In diesem Falle ist die Richtung der Positionierung des Frei-Zeigers beim Belegen einer Adresse von Bedeutung. Wird zum Beispiel beim Belegen einer Adresse der Frei-Zeiger entlang der "next/prev-Verkettung" immer auf die nächst höhere/niedrigere Indexposition bewegt ("step-up/step-down direction"), muß beim Freigeben einer ATM-Adresse diese Positionierung wieder hergestellt werden. Dazu ist beim Freigeben von ATM-Adressen zunächst zu prüfen, auf welcher Position der Frei-Zeiger, der das nächste freie Adresselement kennzeichnet, steht. Weist der Frei-Zeiger auf einen Index der niedriger/höher ist, als der des Adresselementes, das freigegeben werden soll, so ist der Frei-Zeiger entlang der "next/prev-Verkettung" auf den nächst höheren/niedrigeren Index oberhalb des freizugebenden Adresselementes zu setzen. In diesem Fall geht das LIFO-Verhalten jedoch verloren.

Das Positionieren des Frei-Zeigers entlang der "prev-"/"next"-Verkettung kann beim Belegen oder Freigeben dynamisch erfolgen, je nachdem welches Verhalten erreicht werden soll. Dann ist eine doppelte Verkettung immer erforderlich. Entscheidet man sich bei der Implementierung des hier vorgestellten Verfahrens nur für eine der beiden Möglichkeiten, (LIFO-Verhalten oder "Wieder-Verkettung" in der ursprünglichen Reihenfolge) ist beim LIFO-Verhalten auch eine einfache Verkettung der Adresselemente ausreichend. Damit kann weiterer Speicherplatz in der Größe von 256 bis 512 Bytes pro Adressblock eingespart werden.

Durch ein Verfahren mit den im Anspruch 16 genannten Merkmalen, zur Ablage, zum Abruf und zur Manipulation von Objektinformationen mit der oben beschriebenen Vorrichtung, wobei die Objektinformationen durch Objektadressen eindeutig bestimmbaren Objekten zugeordnet sind, bei dem die an einer Eingabevorrichtung bereitgestellte Objektadresse durch eine Speicherverwaltung segmentiert wird, bei dem die Speicherverwaltung das erste Adresssegment auf ein Adresselement eines ersten Adressblocks abbildet, wobei der Adressblock den Adressraum des Adresssegmentes abdeckt, bei dem die Speicherverwaltung überprüft, ob das Adresselement auf einen hierarchisch untergeordneten Adressblock verweist, bei dem die Speicherverwaltung im Falle der Existenz eines hierarchisch untergeordneten Adressblocks das nächste Adresssegment der Objektadresse auf diesen Adressblock abbildet, um sich dann mit jedem Adresssegment in der gleichen Form zum Ende, also dem Blatt, des Baumes zu bewegen, in dem die Objektinformationen abgelegt sind, bei dem bei einem Fehlen eines Verweises keine Objektinformationen abgerufen oder manipuliert werden können und bei der Ablage von Objektinformationen die Speicherverwaltung Adressblöcke bereitstellt, um diese in den hierarchischen Weg einzufügen, und bei dem die durch die Operationen ermittelten Informationen dem Ausgabemittel übergeben werden, ist es ferner vorteilhaft möglich, ein effizientes Zugriffs- und Manipulationsverfahren bereitzustellen, mit dem Objektinformationen, insbesondere Statusinformationen von ATM-Verbindungen, verwaltet werden können.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: einen Adressblock, bei dem die Belegung der VPI-VCI-Adressen durch eine 1 im Adresselement symbolisiert ist und die Nicht-Belegung durch eine 0;
- Figur 2: einen Adressblock mit Adresselementen, die doppelt verkettet sind, falls die VPI-VCI-Adresse nicht belegt ist, und mit einem Adresszeiger, der auf das nächste freie Adresselement zeigt;
- Figur 3: den Adressblock nach Figur 2 nach Anforderung einer freien Adresse, wobei die belegte Adresse durch eine 1 in der Statusspalte gekennzeichnet ist;
- Figur 4: den Adressblock nach Figur 3 nach Anforderung der vierten Adresse;
- Figur 5: den Adressblock nach Figur 4 nach der Anforderung der zweiten Adresse;
- Figur 6: den Adressblock nach Figur 5 nach Freigabe der vierten Adresse, wobei durch die Pfeile angezeigt wird, wie sich die neue Verkettung berechnet;
- Figur 7: den Adressblock nach Figur 6 nach Freigabe der nullten Adresse mit der entsprechenden neuen Verkettung;
- Figur 8: den Adressblock nach Figur 7 nach Freigabe der zweiten Adresse;
- Figur 8a: einen Adressblock mit einer Reihe von belegten Adressen, bei dem die Adresse sieben freigegeben wird;
- Figur 9: die baumförmige hierarchische Verkettung der Adressblöcke, wobei die VPI/VCI-Adresse je nachdem ob UNI oder NNI in drei (Vpi-LSB, Vci-MSB, Vci-LSB) beziehungsweise in vier (Vpi-MSB, Vpi-LSB, Vci-MSB, Vci-LSB) Bytes segmentiert ist, dabei ist jedes Adresssegment auf einer Ebene des Adressbaumes abgebildet;
- Figur 10: den Aufbau eines Adresselements mit Verkettungsinformationen, Statusinformationen und Verweisen auf die nächsten Adressblöcke;
- Figur 11: die Anordnung des Adressblocks im Pool, ohne jegliche Belegung der Adresselemente;
- Figur 11a: einen Adressblock und ein dynamisch zugeordnetes Adresselement, die jeweils aus den Pools entfernt wurden;
- Figur 12: einen Speicherpool, bei dem die vollständig belegten Adressblöcke miteinander verkettet sind, und die nicht vollständig belegten Adressblöcke aus der Verkettung der freien Blöcke entfernt sind.

### Beschreibung der Ausführungsbeispiele

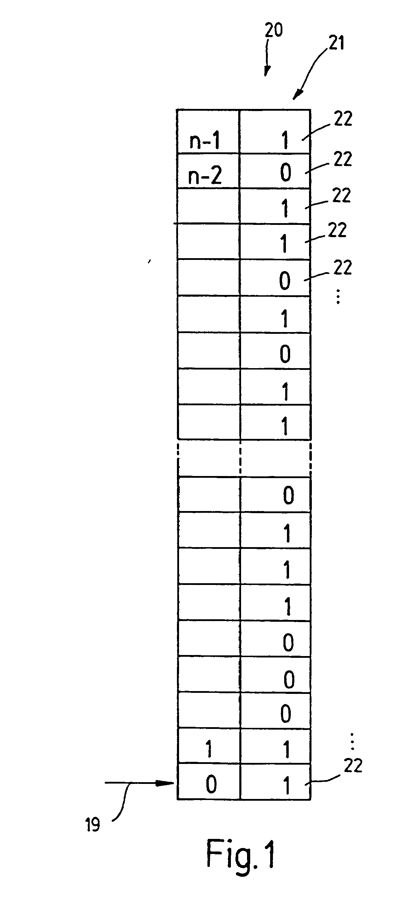

Die Figur 1 zeigt einen Adressblock 20, bei dem die Belegung von VPI-VCI-Adressen 21 durch eine 1 in einem zugehörigen Adresselement 22 dargestellt ist und die Nicht-Belegung durch eine 0. Der Adressblock 20 ist vorteilhafterweise ein linearer, zusammenhängender Speicherbereich. Der Adressblock 20 ist so ausgebildet, daß durch Abbildung (Adresszeiger 19-addrstate-index) des letzten Segments der VPI-VCI-Adresse 21 - diese kann in der Regel durch eine lineare Funktion erfolgen - auf das Adresselement 22 und die entsprechende Statusinformation der Verbindung zugegriffen werden kann.

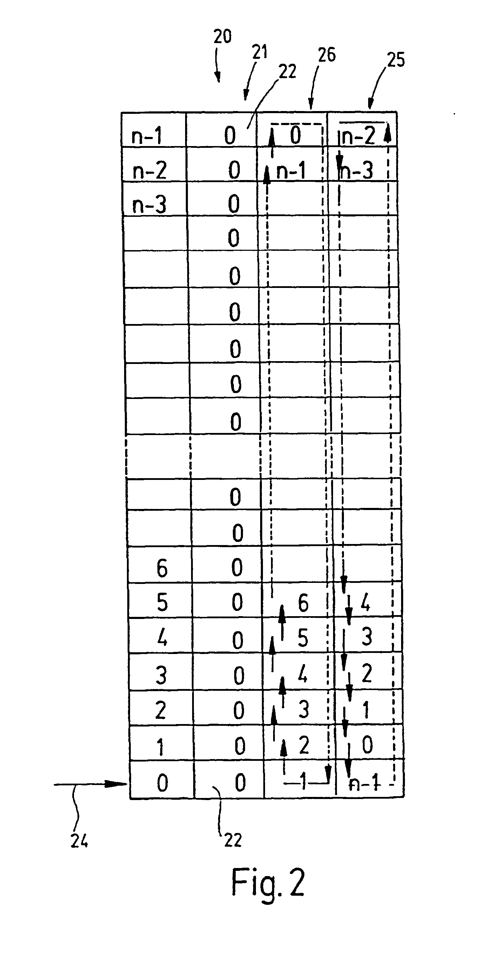

Figur 2 zeigt einen Adressblock 20, bei dem Adresselemente 22 der nicht belegten VPI-VCI-Adressen 21 doppelt verkettet sind. Dabei zeigt ein Adresszeiger 24 (next-free-addr-index) auf das nächste freie Adresselement 22. Hierdurch ist eine Suche nach nicht belegten Adressen 21 in konstanter Zeit (O(1)) möglich.

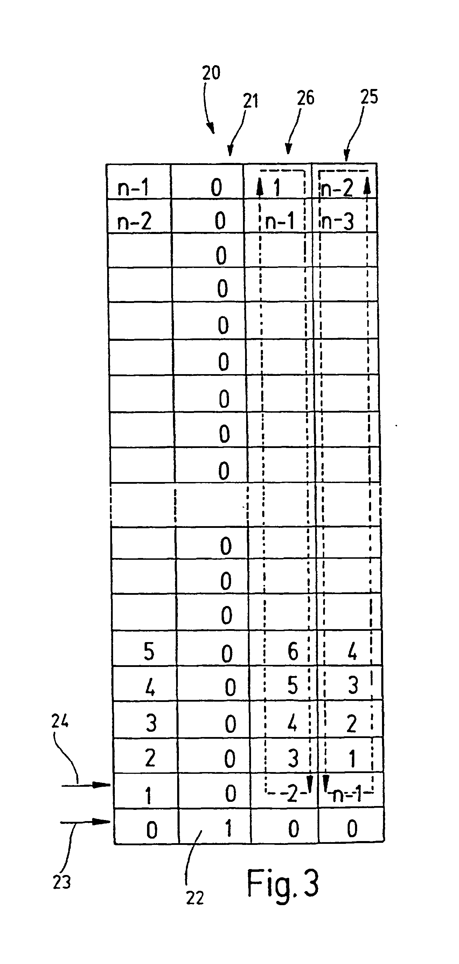

Die Figuren 3 bis 8a zeigen die Belegung und die Freigabe von Adressen (Verbindungen).

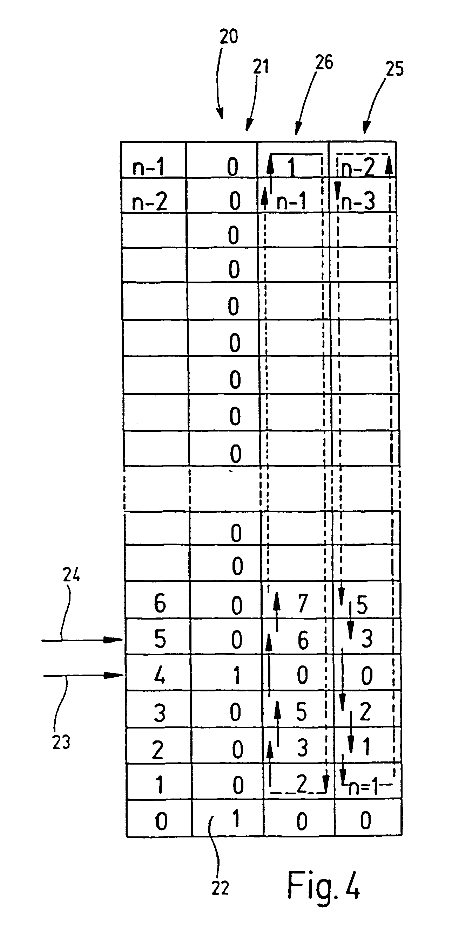

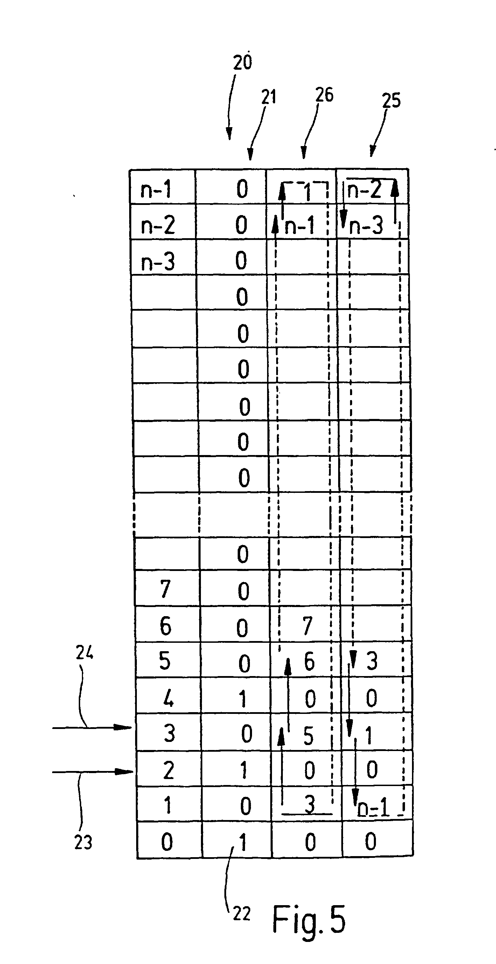

Bei der Belegung von Adressen (Adresszeiger 23 -get next free addr 0-), wird das entsprechende Adresselement 22 aus dem doppelt verketteten Vektor entfernt. Die neue Verkettungsstruktur ergibt sich nach bekannten Verfahren, wobei der Nachfolgerverweis des Vorgänger-Adresselements 22 mit dem Nachfolgerverweis des zu entfernenden Adresselements 22 versehen wird. Entsprechend wird der Vorgängerverweis des Nachfolger-Adresselements 22 mit dem Vorgängerverweis des zu entfernenden Adresselements 22 versehen. Vorgängersowie Nachfolger-Adresselement 22 sind durch einen "prev-Verweis" 25 beziehungsweise "next-Verweis" 26 bestimmbar. Der Adresszeiger 24 zeigt danach auf den Vorgänger des entfernten Adresselements 22. In Figur 3 ist beispielsweise die Belegung der Adresse 0, in Figur 4 die Belegung der Adresse 4 und in Figur 5 die Belegung der Adresse 2 veranschaulicht.

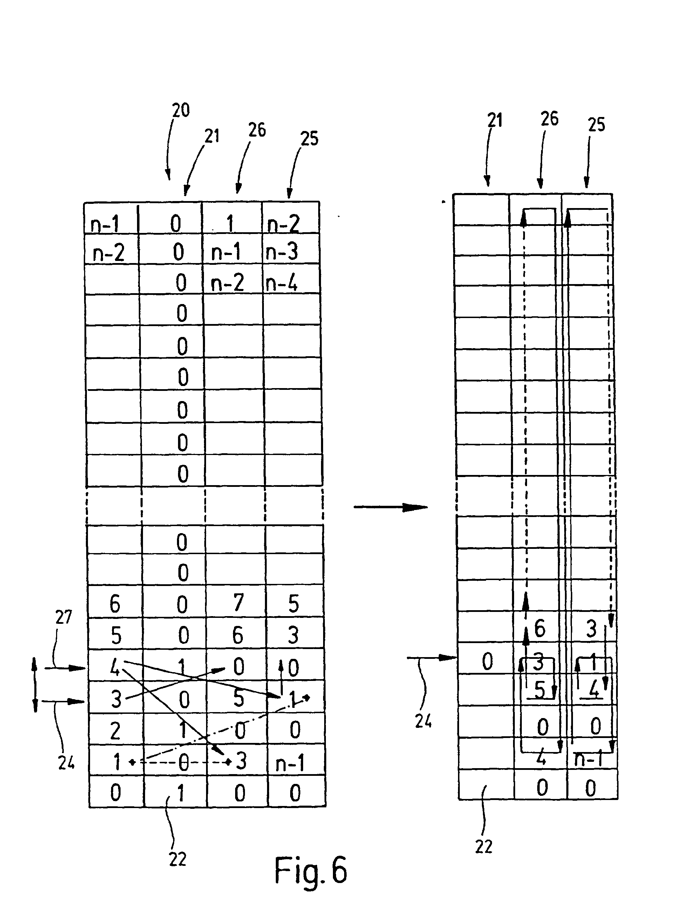

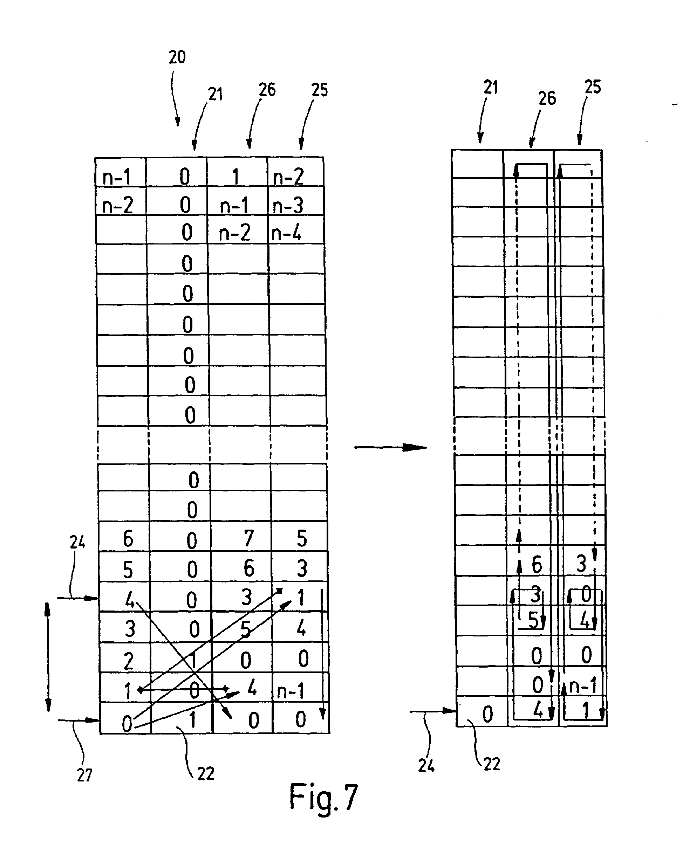

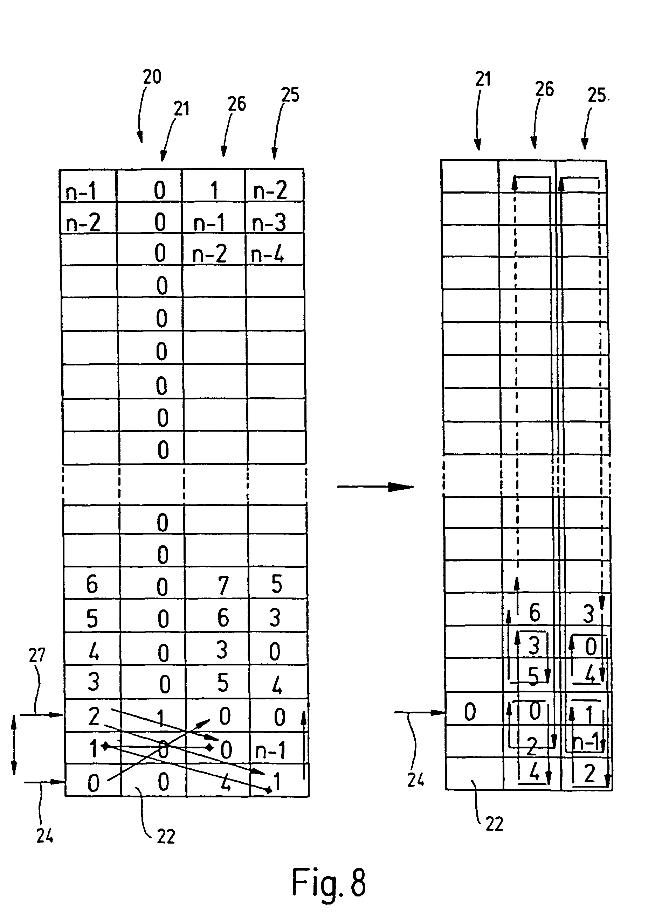

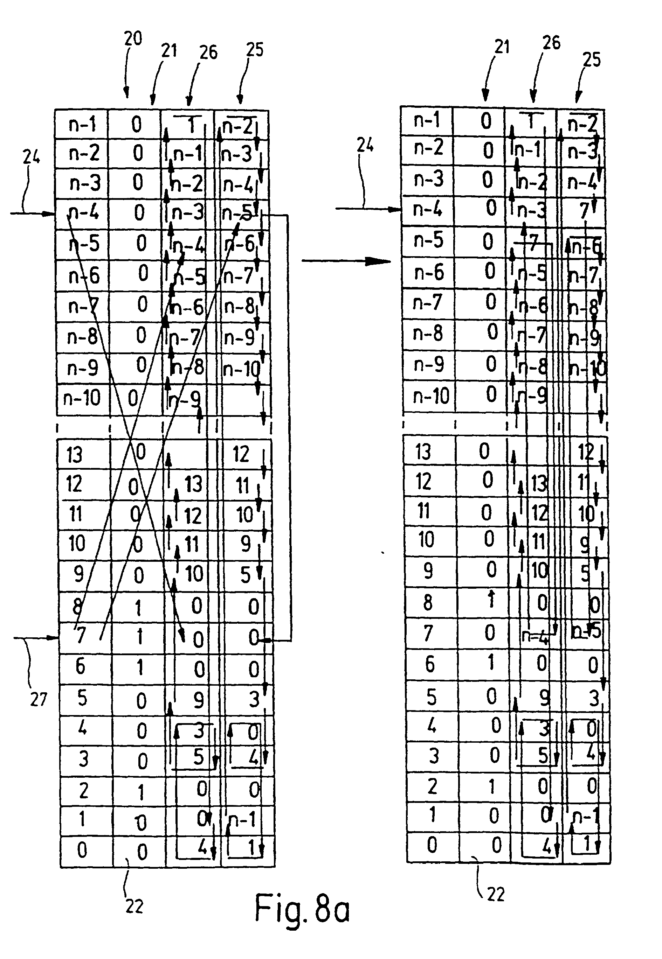

Bei der Freigabe (Adresszeiger 27-rest-addr) einer Adresse 21 wird das Adresselement 22 wieder in die Verkettung eingefügt. Dabei erfolgt das Einfügen an der Position, an der der Adresszeiger 24 steht. Dabei wird der Nachfolger des Adresselements 22, auf den der Adresszeiger 24 steht, das freigegebene Adresselement 22. Das freigegebene Adresselement 22 zeigt auf den ursprünglichen Nachfolger des Adresselements 22, auf den der Adresszeiger steht. Der Vorgänger des freigegebenen Adresselements 22 ist das Adresselement 22, auf den der Adresszeiger zeigt. Der Vorgänger des ursprünglichen Nachfolgers des Adresselements 22, auf den der Adresszeiger steht, ist das freigegebene Adresselement. Nach dem Einfügen wird der Adresszeiger auf das freigegebene Adresselement 22 bewegt. In Figur 6 ist beispielsweise die Freigabe der Adresse 4, in Figur 7 die Freigabe der Adresse 0 und in Figur 8 die Freigabe der Adresse 2 veranschaulicht. In Figur 8a ist die Freigabe einer Adresse allgemein verdeutlicht, wobei die abfolgenden Schritte mit 1, 2, 3 und 4 bezeichnet sind.

Alle diese - anhand der Figuren 1 bis 8a verdeutlichten - Verkettungsoperationen sind Stand der Technik und bedürfen somit keiner weitergehenden Beschreibung.

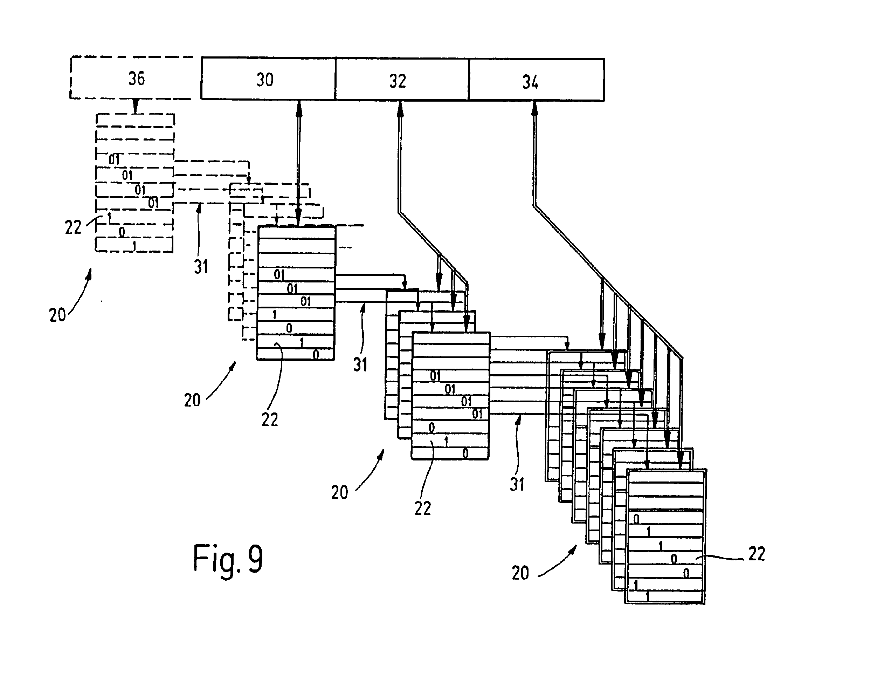

Figur 9 zeigt eine baumförmige, hierarchische Verkettung der Adressblöcke 20, wobei die VPI/VCI-Adresse 21 je nachdem ob UNI-Port oder NNI-Port in drei (Vpi-LSB 30, Vci-MSB 32, Vci-LSB 34) beziehungsweise in vier (Vpi-MSB 36, Vpi-LSB 30, Vci-MSB 32, Vci-LSB 34) Bytes segmentiert ist. Die gestrichelte Darstellung des Vpi-MSB 36 Bytes bezieht sich hierbei auf eine NNI-Adresse. Wie bereits ausgeführt, werden die Adresssegmente 22 auf eine Ebene des Adressbaumes abgebildet. In jeder Ebene befinden sich maximal eine quadratische Anzahl von Adressblöcken 20 der vorherigen Ebene. Das bedeutet, bei einer NNI-Adresse besteht die Wurzel aus einem Adressblock 20, die zweite Ebene aus 2⁸ = 256 Adressblöcken 20, die dritte Ebene aus 256² und die vierte Ebenen aus 256³ Adressblöcken 20. Bei UNI-Adressen gibt es hingegen eine Ebene weniger.

Nicht alle Adresselemente 22 eines übergeordneten Adressblocks 20 besitzen einen Verweis (Pfeile 31) auf einen untergeordneten Adressblock 20. Dies ist nur dann der Fall, wenn eine Adresse 21 belegt ist, dessen entsprechendes Adresssegment auf das Adresselement 22 abgebildet wird.

Wird eine neue Adresse 21 belegt, für die noch kein Pfad zum Blatt des Adressbaumes existiert, so reiht die Speicherverwaltung entsprechend viele Adresssegmente hierarchisch aneinander, bis ein vollständiger Pfad entstanden ist. Die Adresselemente 22 des letzten Segments besitzen keine weitergehenden Verweise, sondern nur den entsprechenden Statuseintrag.

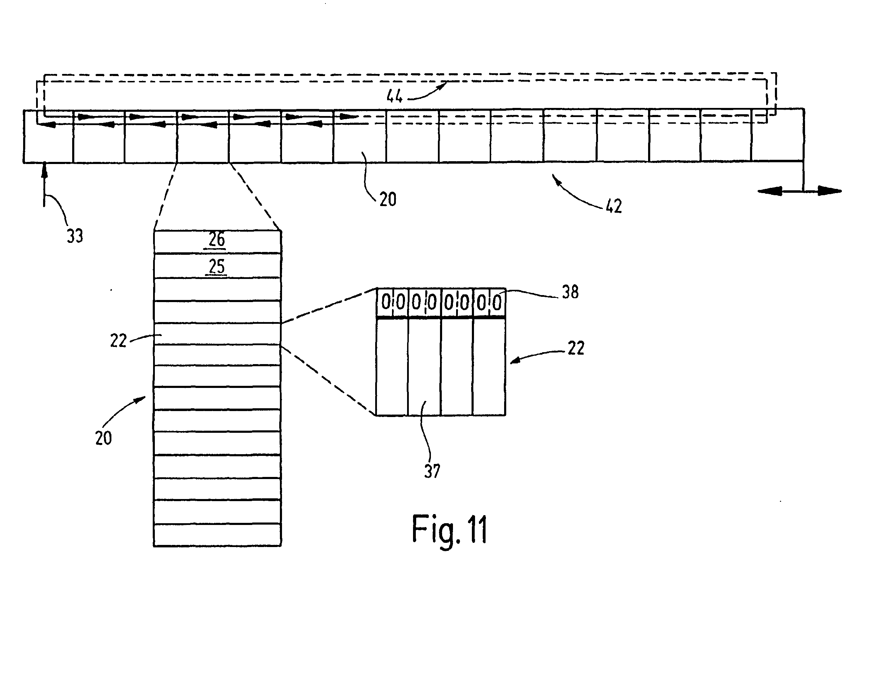

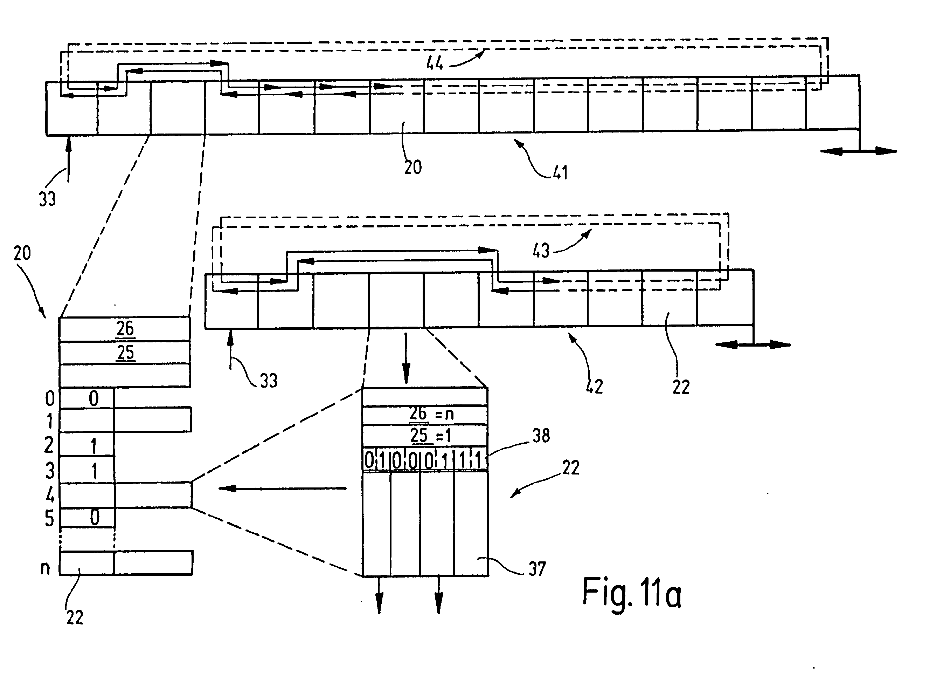

Wird eine Adresse 21 freigegeben, so wird der Adressblock 20, falls er nicht durch andere Adressen 21 belegt ist, an einen entsprechenden Pool weitergegeben, wo ihn die Speicherverwaltung verwaltet. Wie Figur 11 zeigt, erfolgt diese Verwaltung ebenfalls in einer Vektorenform. Der Vektor ist vorzugsweise doppelt verkettet und wird nach dem LIFO-Prinzip verwaltet. Ein entsprechender Frei-Zeiger 33 versteht sich von selbst.

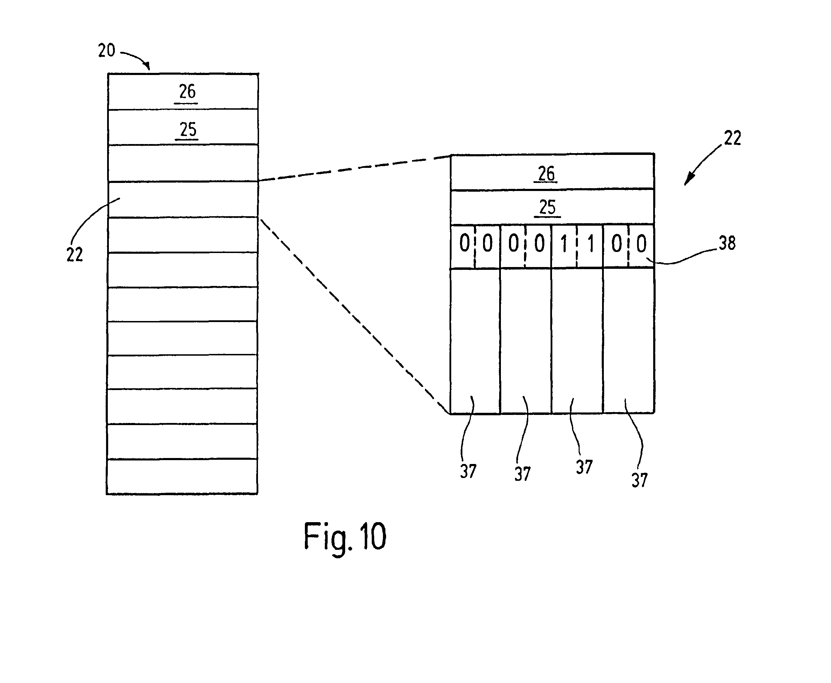

Figur 10 zeigt beispielhaft ein einzelnes Adresselement 22 des Adressblocks 20. Das Adresselement mit der Größe 1 Byte enthält vier Statuseinträge 38. Jeder Statuseintrag umfaßt 2 Bit zur Codierung von vier Statusinformationen (00, 01, 10, 11). Das heißt, um in diesem Beispiel 256 Adresswerte mit vier Statusinformationen in ein Adressblock verwalten zu können, sind 256/4 = 64 Adresselemente 22 erforderlich.

Je nach Notwendigkeit können jedoch beliebig andere Größen verwendet werden. Das Adresselement kann ein Vielfaches von 1 Byte sein, ein Statuseintrag demgegenüber kann ein Vielfaches von 1 Bit sein. Das heißt, je nach Größe des Adresselementes und der Anzahl der Statusinformationen ist die Anzahl der Adresselemente pro Adressblock unterschiedlich. Das Verfahren selbst ist unabhängig von der Größe der oben genannten Elemente. Es erlaubt daher, daß bei der Einrichtung der Speicherbereiche für die Verwaltung die Elemente per Konfigurationsparameter je nach Bedarf einstellbar sind.

Wie Figur 10 zeigt, kann ein Adresselement 22 mehrere Verweise 37 beinhalten, wobei die Belegung der Verweise 37 durch entsprechende Statuseinträge 38 erfolgt. So kann zum Beispiel 00 für frei, 01 für reserviert (zum Beispiel für das System), 10 benutzt und 11 für voll belegt stehen. Je nach Realisierung sind die Adresselemente 22 feste Bestandteile der Adressblöcke 20 oder - wie Figur 11a zeigt - dynamisch zuweisbar. Die Adresselemente 22 werden ebenso wie die Adressblöcke 20, die in einem Pool 41 verwaltet werden, in einem Pool 42 verwaltet. Dieser Pool 42 ist vorzugsweise durch einen doppelt verketteten Vektor 43 organisiert. Je nach Bedarf wird bei der Belegung oder der Freigabe einer Adresse 21 ein neues Adresselement 22 vom Pool 42 angefordert oder zurückgegeben. Für den Fall, daß eine Zuweisung erfolgte, verwaltet der Adressblock 20 einen entsprechenden Verweis. In den anderen Fällen sind entsprechende Einträge für voll oder frei vorgesehen.

Der Pool 41 für die Adressblöcke 20 und der Pool 42 für die Adresselemente 22 sind je nach Bedarf erweiterbar, so daß bei einer verstärkten Nachfrage der Bedarf gedeckt werden kann.

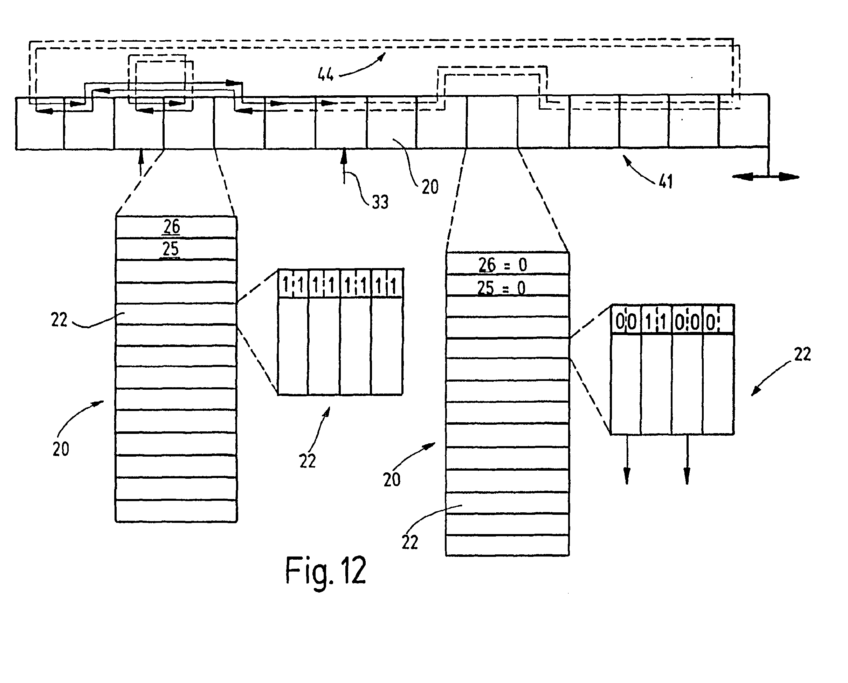

Wie bereits oben ausgeführt wurde, werden vollständig belegte Adressblöcke 20 aus dem Adressbaum entfernt und dem entsprechenden Pool 41 übergeben. Wie Figur 12 zeigt, verwaltet der Pool 42 diese Elemente in einem separaten Vektor 44, der vorzugsweise doppelt verkettet ist. In das Adresselement 22 des Adressblocks 20 der übergeordneten Ebenen wird, soweit der Adressblock 20 nicht ebenfalls vollständig belegt ist, ein entsprechender Vermerk anstatt des Verweises eingetragen. Die Verkettung im Pool 41 hat den Vorteil, daß bei einer Freigabe einer Adresse 21 die vollständig belegten Adressblöcke 20 schnell in den Adressbaum eingefügt werden können und nur eine Statusinformation, nämlich die der freigegebenen Adresse, geändert werden muß.

## Patentansprüche

1. vorrichtung zur Ablage, zum Abruf und zur Manipulation von Objektinformationen, wobei die Objektinformationen durch Objektadressen eindeutig bestimmbaren Objekten zugeordnet sind, mit Ein- und Ausgabemitteln, mit einem Speicher, in dem die Objektinformationen abgelegt sind, mit einer Speicherverwaltung, die die Ablage, den Zugriff und das Löschen von Objektinformationen im Speicher steuert, wobei bei einem Zugriff auf die Objektinformationen die Objektadresse des zugreifenden Objektes durch die Speicherverwaltung segmentiert wird, um dann die einzelnen Adresssegmente auf Adressblöcke (20) abzubilden, wobei die Adressblöcke (20) baumförmig hierarchisch miteinander verknüpft sind und eine eindeutige Abbildung des Adresssegmentes auf ein eindeutiges Adresselement (22) im Adressblock (20) erlauben, wobei in dem Adresselement (22) Verweise auf den nächsten Adressblock (20) und/oder Statusinformation und/oder Objektinformationen abgelegt sind, und jede Ebene des Adressbaumes ein Adresssegment der Objektadresse darstellt, bei dem in der untersten Ebene (dem Blatt) die auszulesenden Objektinformationen abgelegt sind, wobei bei einer Ablage von Objektinformationen die Objektadresse durch die Speicherverwaltung segmentiert wird, um den durch die Segmentierung festgelegten Pfad durch die Knoten des durch die Adressblöcke (20) dargestellten Adressbaumes zu wählen und im Falle der Existenz eines vollständigen Pfades im das Blatt darstellenden Adressblock (20) die Objektinformationen abzulegen, und im Falle des Fehlens eines vollständigen Pfades von der Speicherverwaltung der Pfad durch Verkettung von Adressblöcken (20) geschaffen wird, wobei bei einem Löschen von Objektinformationen die Speicherverwaltung die Adressblöcke (20) aus dem die Objektadresse darstellenden hierarchischen Pfad entfernt, die keine Objektinformationen oder Verweise auf einen nächsten Adressblock (20) aufweisen.

2. Vorrichtung nach Anspruch 1, **dadurch gekennzeichnet, daß** die Speicherverwaltung keine Objektadressen oder Adresssegmente als solche speichert.

3. Vorrichtung nach den Ansprüchen 1 und 2, **dadurch gekennzeichnet, daß** die Speicherverwaltung die Adressblöcke (20) in einem Pool (41) dynamisch verwaltet, um sie bei der Ablage von Informationen bereitzustellen oder sie nach dem Löschen entgegenzunehmen.

4. Vorrichtung nach den Ansprüchen 1 bis 3, **dadurch gekennzeichnet, daß** die Adressblöcke (20) linear zusammenhängende Speicherbereiche sind, die mindestens so viele Adresselemente (22) aufweisen, wie durch das Adresssegment der Objektadresse darstellbar sind.

5. Vorrichtung nach den Ansprüchen 1 bis 4, **dadurch gekennzeichnet, daß** die Adresselemente (22) dynamisch erzeugbar sind, in einem Pool (42) von der Speicherverwaltung verwaltet werden und bei Bedarf in den Adressblock (20) einhängbar oder aushängbar sind.

6. Vorrichtung nach den Ansprüchen 1 bis 5, **dadurch gekennzeichnet, daß** die Adresselemente (22) in den Adressblöcken (20) miteinander verkettet sind.

7. Vorrichtung nach Anspruch 6, **dadurch gekennzeichnet, daß** die nicht belegten Adresselemente (22) miteinander verkettet sind, und ein Adresselementzeiger (24) auf das nächste freie Adresselement zeigt.

8. Vorrichtung nach Anspruch 7, **dadurch gekennzeichnet, daß** die Adresselemente (22) doppelt miteinander verkettet sind.

9. Vorrichtung nach den Ansprüchen 7 und 8, **dadurch gekennzeichnet, daß** die Adresselemente (22) in der Verkettung nach dem LIFO-verfahren (Last In First Out) verwaltet sind.

10. Vorrichtung nach den Ansprüchen 1 bis 9, **dadurch gekennzeichnet, daß** es sich um eine ATM-Vermittlungseinrichtung handelt, wobei die Objekte Verbindungen zwischen ATM-Netzwerkteilnehmern sind, die Objektadressen VPI-VCI-Adressen (21) eines Ports sind, die Objektinformationen der Status der Verbindungen sind.

11. Vorrichtung nach Anspruch 10, **dadurch gekennzeichnet, daß** die Speicherverwaltung die VPI-VCI-Adresse (21) in Byte Adresssegmente (22) unterteilt.

12. Vorrichtung nach Anspruch 11, **dadurch gekennzeichnet, daß** die Adressblöcke (20) bei Bedarf 256 Adresselemente (22) bereitstellen.

13. Vorrichtung nach Anspruch 11 und 12, **dadurch gekennzeichnet, daß** der Adressraum bei UNI (24-Bit lange VPI-VCI-Adresse) auf einen Adressbaum mit drei Ebenen beziehungsweise auf einen Adressbaum mit vier Ebenen bei NNI (28-Bit lange VPI-VCI-Adresse) abgebildet wird.

14. Vorrichtung nach den Ansprüchen 10 bis 13, **dadurch gekennzeichnet, daß** bei einer ATM-Vermittlungseinrichtung mit mehreren Ports entsprechend viele Adressbäume vorgesehen sind, die die Adressräume der VPI-VCI-Adressen für jeden Port abbilden, wobei die Speicherverwaltung allen Adressbäumen je nach Bedarf Adressblöcke (20) und/oder Adresselemente (22) bereitstellt.

15. Vorrichtung nach den Ansprüchen 1 bis 14, **dadurch gekennzeichnet, daß** die Speicherverwaltung einen mit Statusinformationen oder Adresselementen (22) vollbelegten Adressblock entfernt und eine entsprechende Information in dem hierarchisch übergeordneten Adressblock (20) anstatt des Verweises hinterlegt.

16. Verfahren zur Ablage, zum Abruf und zur Manipulation von Objektinformationen auf einer Vorrichtung nach den Ansprüchen 1 bis 15, wobei die Objektinformationen durch Objektadressen eindeutig bestimmbaren Objekten zugeordnet sind, bei dem die an einer Eingabevorrichtung bereitgestellte Objektadresse durch eine Speicherverwaltung segmentiert wird, bei dem die Speicherverwaltung das erste Adresssegment auf ein Adresselement (22) eines ersten Adressblocks (20) abbildet, wobei der Adressblock (20) den Adressraum des Adresssegmentes abdeckt, bei dem die Speicherverwaltung überprüft, ob das Adresselement (22) auf einen hierarchisch untergeordneten Adressblock (20) verweist, bei dem die Speicherverwaltung im Falle der Existenz eines hierarchisch untergeordneten Adressblocks (20) das nächste Adresssegment der Objektadresse auf diesen Adressblock (20) abbildet, um sich dann mit jedem Adresssegment in der gleichen Form zum Ende, also dem Blatt, des Baumes zu bewegen, in dem die Objektinformationen abgelegt sind, bei dem bei einem Fehlen eines Verweises keine Objektinformationen abgerufen oder manipuliert werden können und bei der Ablage von Objektinformationen die Speicherverwaltung Adressblöcke (20) bereitstellt, um diese in den hierarchischen Weg einzufügen, und bei dem die durch die Operationen ermittelten Informationen dem Ausgabemittel übergeben werden.

17. Verfahren nach Anspruch 16, **dadurch gekennzeichnet, daß** beim Hinzufügen eines hierarchischen Weges die Adresselemente (22) dynamisch dem Adressblock (20) zugeordnet werden, wobei die Adresselemente (22) von der Speicherverwaltung verwaltet und bei Bedarf erzeugt werden.

18. Verfahren nach Anspruch 16 und 17, **dadurch gekennzeichnet, daß** die Adressblöcke (20) von der Speicherverwaltung verwaltete werden und bei Bedarf erzeugt werden.

19. Verfahren nach den Ansprüchen 16 bis 18, **dadurch gekennzeichnet, daß** in die Adresselemente (22) zusätzlich zu den Verweisen Statusinformationen über den nachfolgenden Adressblock (20) oder, falls es sich um ein Blatt im Adressbaum handelt, Objektinformationen eingetragen werden.

20. Verfahren nach den Ansprüchen 16 bis 19, **dadurch gekennzeichnet, daß** falls die Objektinformationen in einem Unterbaum für alle Objekte identisch sind, der vollständige Adressunterbaum von der Speicherverwaltung entfernt wird, und eine entspechende Information im Adresselement (22) des dem Adressunterbaum übergeordneten Adressblocks (20) gespeichert wird.

21. Verfahren nach den Ansprüchen 16 bis 20, **dadurch gekennzeichnet, daß** die nicht belegten Adresselemente (22) in einem Adressblock (20) miteinander verkettet sind, und ein Adresselementzeiger (24) auf das erste nicht belegte Adresselement zeigt, bei der Belegung eines Adresselements (22) dieses aus der Verkettung entfernt wird und bei der Freigabe (27) dieses in die Verkettung eingefügt wird.

22. Verfahren nach Anspruch 21, **dadurch gekennzeichnet, daß** das die Verkettung der Adresselemente (22) nach dem LIFO-Verfahren erfolgt.

23. Verfahren nach den Ansprüchen 21 und 22, **dadurch gekennzeichnet, daß** bei der Suche nach einer freien Objektadresse die Objektadresse gewählt wird, auf die der Adresszeiger zeigt.

## Claims

1. Device for storing, retrieving and manipulating object information, the object information being assigned, by means of object addresses, to objects which can be uniquely determined, said device having input and output means, having a memory in which the object information is stored, and having a memory management system which controls the storage of, the access to and the erasure of object information in the memory, the object address of the object which accesses the object information being segmented by the memory management system, in the event of said object information being accessed, in order to then map the individual address segments to address blocks (20), the address blocks (20) being hierarchically linked to one another in the form of a tree and allowing the address segment to be uniquely mapped to a unique address element (22) in the address block (20), references to the next address block (20) and/or status information and/or object information being stored in the address element (22), and each level of the address tree representing an address segment of the object address, in which the object information to be read out is stored in the lowermost level (the leaf), the object address being segmented by the memory management system, in the event of object information being stored, in order to select the path (which is determined by the segmentation) through the nodes of the address tree that is represented by the address blocks (20) and, in the case of the existence of a complete path in the address block (20) that represents the leaf, in order to store the object information, and, in the case of the lack of a complete path, the memory management system creating the path by concatenating address blocks (20), the memory management system removing the address blocks (20), which do not have any object information or references to a next address block (20), from the hierarchical path that represents the object address in the event of object information being erased.

2. Device according to Claim 1, **characterized in that** the memory management system does not store any object addresses or address segments as such.

3. Device according to Claims 1 and 2, **characterized in that** the memory management system dynamically manages the address blocks (20) in a pool (41) in order to provide them when information is being stored or to receive them after they have been erased.

4. Device according to Claims 1 to 3, **characterized in that** the address blocks (20) are linearly contiguous memory areas having at least as many address elements (22) as can be represented by the address segment of the object address.

5. Device according to Claims 1 to 4, **characterized in that** the address elements (22) can be dynamically generated, are managed by the memory management system in a pool (42) and can be added to or removed from the address block (20) as required.

6. Device according to Claims 1 to 5, **characterized in that** the address elements (22) are concatenated in the address blocks (20).

7. Device according to Claim 6, **characterized in that** the address elements (22) which have not been filled are concatenated, and an address element pointer (24) points to the next free address element.

8. Device according to Claim 7, **characterized in that** the address elements (22) are concatenated twice.

9. Device according to Claims 7 and 8, **characterized in that** the address elements (22) in the concatenation are managed according to the LIFO (Last In First Out) method.

10. Device according to Claims 1 to 9, **characterized in that** said device is an ATM switching device, the objects being connections between ATM network subscribers, the object addresses being VPI-VCI addresses (21) of a port, and the object information being the status of the connections.

11. Device according to Claim 10, **characterized in that** the memory management system subdivides the VPI-VCI address (21) into bytes of address segments (22).

12. Device according to Claim 11, **characterized in that** the address blocks (20) provide 256 address elements (22) as required.

13. Device according to Claims 11 and 12, **characterized in that**, in the case of UNI (VPI-VCI address having a length of 24 bits), the address space is mapped to an address tree having three levels or, in the case of NNI (VPI-VCI address having a length of 28 bits), the address space is mapped to an address tree having four levels.

14. Device according to Claims 10 to 13, **characterized in that**, in the case of an ATM switching device having a plurality of ports, provision is made of a correspondingly large number of address trees which map the address spaces of the VPI-VCI addresses for each port, the memory management system providing all of the address trees with address blocks (20) and/or address elements (22) depending on requirements.

15. Device according to Claims 1 to 14, **characterized in that** the memory management system removes an address block which has been completely filled with status information or address elements (22) and stores a corresponding item of information in the hierarchically superordinate address block (20) instead of the reference.

16. Method for storing, retrieving and manipulating object information in a device according to Claims 1 to 15, the object information being assigned, by means of object addresses, to objects which can be uniquely determined, in which method the object address that is provided at an input device is segmented by a memory management system, in which method the memory management system maps the first address segment to an address element (22) of a first address block (20), the address block (20) covering the address space of the address segment, in which method the memory management system checks whether the address element (22) refers to a hierarchically subordinate address block (20), in which method, in the case of the existence of a hierarchically subordinate address block (20), the memory management system maps the next address segment of the object address to said address block (20) in order to then move, with each address segment in the same form, to the end, i.e. the leaf, of the tree in which the object information is stored, in which method, in the case of a lack of a reference, no object information can be retrieved or manipulated and, in the event of object information being stored, the memory management system provides address blocks (20) in order to insert them into the hierarchical path, and in which method the information that is determined by means of the operations is passed to the output means.

17. Method according to Claim 16, **characterized in that**, when a hierarchical path is added, the address elements (22) are dynamically assigned to the address block (20), the address elements (22) being managed by the memory management system and being generated as required.

18. Method according to Claims 16 and 17, **characterized in that** the address blocks (20) are managed by the memory management system and are generated as required.

19. Method according to Claims 16 to 18, **characterized in that**, in addition to the references, status information regarding the subsequent address block (20) or, if it is a question of a leaf in the address tree, object information is entered in the address elements (22).

20. Method according to Claims 16 to 19, **characterized in that**, if the object information in a subtree is identical for all objects, the complete address subtree is removed by the memory management system, and a corresponding item of information is stored in the address element (22) of the address block (20) that is superordinate to the address subtree.

21. Method according to Claims 16 to 20, **characterized in that** the address elements (22) in an address block (20) which have not been filled are concatenated, and an address element pointer (24) points to the first address element which has not been filled and, when an address element (22) is filled, the latter is removed from the concatenation and is inserted into the concatenation when it is released (27).

22. Method according to Claim 21, **characterized in that** the address elements (22) are concatenated according to the LIFO method.

23. Method according to Claims 21 and 22, **characterized in that**, when searching for a free object address, the object address to which the address pointer points is selected.

## Revendications

1. Dispositif de stockage, d'appel et de manipulation d'informations d'objets, les informations d'objets étant associées de façon univoque à des objets déterminables par le biais d'adresses d'objets, ledit dispositif comportant des moyens d'entrée et de sortie, une mémoire dans laquelle sont stockées les informations d'objets, un gestionnaire de mémoire qui commande l'accès aux informations d'objets ainsi que leur stockage et effacement dans la mémoire, l'adresse d'un objet visé étant segmentée par le gestionnaire de mémoire lorsque l'on cherche à accéder aux informations d'objets afin de représenter ensuite les segments d'adresse individuels sur des blocs d'adresse (20), les blocs d'adresse (20) étant combinés entre eux suivant une hiérarchie arborescente et permettant une application univoque du segment d'adresse à un élément d'adresse univoque (22) dans le bloc d'adresse (20), la référence au bloc d'adresse suivant (20) et/ou l'information d'état suivante et/ou aux informations d'objet suivant étant stockés dans l'élément d'adresse (22), et chaque niveau de l'arbre d'adresses représentant un segment d'adresse de l'adresse d'objet dans lequel les informations d'objets à lire sont stockées au niveau inférieur (la feuille), l'adresse d'objet étant segmentée lors d'un stockage d'informations d'objets par le gestionnaire de mémoire afin de choisir le chemin, déterminé par la segmentation, qui passe par les noeuds de l'arbre d'adresses représenté par les blocs d'adresse (20) et, en cas d'existence d'un chemin complet, de stocker les informations d'objets dans le bloc d'adresse (20) représentant la feuille, et, en cas d'absence d'un chemin complet, le chemin est créé par le gestionnaire de mémoire par concaténation de blocs d'adresse (20), le gestionnaire de mémoire supprimant du chemin hiérarchique représentant l'adresse d'objet, lors d'un effacement d'informations d'objets, les blocs d'adresse (20) qui ne comportent aucune information d'objet ou aucune référence à un bloc d'adresse suivant (20).

2. Dispositif selon la revendication 1, **caractérisé en ce que** le gestionnaire de mémoire ne mémorise aucune adresse d'objet où aucun segment d'adresse en tant que tel.

3. Dispositif selon les revendications 1 et 2, **caractérisé en ce que** le gestionnaire de mémoire gère dynamiquement les blocs d'adresse (20) dans un regroupement (41) pour les délivrer lors du stockage d'informations ou de les accepter après l'effacement.

4. Dispositif selon les revendications 1 à 3, **caractérisé en ce que** les blocs d'adresse (20) sont des zones de mémoire linéairement contiguës qui comporte au moins autant d'éléments d'adresse (22) que l'on peut représenté par le segment d'adresse de l'adresse d'objet.

5. Dispositif selon les revendications 1 à 4, **caractérisé en ce que** les éléments d'adresse (22) peuvent être généré dynamiquement, être géré en un regroupement (42) par le gestionnaire de mémoire et être emboîtés dans le bloc d'adresse (20) ou déboîtés de celui-ci, selon le besoin.

6. Dispositif selon les revendications 1 à 5, **caractérisé en ce que** les éléments d'adresse (22) sont concaténés entre eux dans les blocs d'adresse (20).

7. Dispositif selon la revendication 6, **caractérisé en ce que** les éléments d'adresse non occupés (22) sont concaténés entre eux, et un pointeur d'élément d'adresse (24) pointe l'élément d'adresse libre suivant.

8. Dispositif selon la revendication 7, **caractérisé en ce que** les éléments d'adresse (22) sont concaténés entre eux en double.

9. Dispositif selon les revendications 7 et 8, **caractérisé en ce que** les éléments d'adresse (22) de la concaténation sont gérés selon le procédé LIFO (Last-In First-Out).

10. Dispositif selon les revendications 1 à 9, **caractérisé en ce qu'**il s'agit d'un dispositif de communication ATM, les objets étant des liaisons entre des abonnés au réseau ATM, les adresses d'objet étant des adresses VPI-CI (21) d'un port qui sont des informations d'objets des états des liaisons.

11. Dispositif selon la revendication 10, **caractérisé en ce que** le gestionnaire de mémoire divise l'adresse VPI-VCI (21) en segments d'adresse par octet (22).

12. Dispositif selon la revendication 11, **caractérisé en ce que** les blocs d'adresse (20) fournissent selon le besoin 256 éléments d'adresse (22).

13. Dispositif selon la revendication 11 et 12, **caractérisé en ce que** l'espace d'adresse est représenté sur un arbre d'adresses comportant trois niveaux dans le cas de UNI (20 adresses VPI-VCI d'une longueur de 24 bits) respectivement sur un arbre d'adresses comportant quatre niveaux dans le cas de NNI (20 adresses VPI-VCI d'une longueur de 28 bits).

14. Dispositif selon les revendications 10 à 13, **caractérisé en ce que**, dans un dispositif de communication ATM à plusieurs ports, il est prévu de façon correspondante de nombreux arbres d'adresse, qui représente les espaces d'adresse des adresses VPI-VCI pour chaque port, le gestionnaire de mémoire fournissant à tous les arbres d'adresse des blocs d'adresse (20) et/ou des éléments d'adresse (22), selon le besoin.

15. Dispositif selon les revendications 1 à 14, **caractérisé en ce que** le gestionnaire de mémoire supprime un bloc d'adresse entièrement occupé par des informations d'état ou des éléments d'adresse (22) et mémorise une information correspondante dans le bloc d'adresse (20) hiérarchiquement supérieur au lieu de la référence.

16. Procédé de stockage, d'appel et de manipulation d'informations d'objets, mis en oeuvre au moyen d'un dispositif selon les revendications 1 à 15, les informations d'objets étant associées de façon univoque à des objets déterminables par des adresses d'objet, procédé dans lequel l'adresse d'objet fourni à un dispositif d'entrée est segmentée par un gestionnaire de mémoire, dans lequel le gestionnaire de mémoire représente le premier segment d'adresse sur un élément d'adresse (22) d'un premier bloc d'adresse (20), le bloc d'adresse (20) couvrant l'espace d'adresse du segment d'adresse, dans lequel le gestionnaire de mémoire vérifie si l'élément d'adresse (22) fait référence à un bloc d'adresse (20) hiérarchiquement supérieur, dans lequel le gestionnaire de mémoire représente le segment d'adresse suivant de l'adresse d'objet sur ce bloc d'adresse (20) en cas d'existence d'un bloc d'adresse (20) hiérarchiquement inférieur afin de se déplacer ensuite avec chaque segment d'adresse sous la même forme jusqu'à la fin, donc jusqu'à la feuille, de l'arbre, dans lequel les informations d'objets sont stockées, dans lequel en cas d'absence d'une référence aucune information d'objet ne peut être appelée ou manipulée et lors du stockage d'informations d'objets le gestionnaire de mémoire fournit des blocs d'adresse (20) pour les insérer dans le chemin hiérarchique, et dans lequel les informations déterminées par les opérations sont transmises au moyen de sortie.

17. Procédé selon la revendication 16, **caractérisé en ce que**, lorsque l'on ajoute un chemin hiérarchique, les éléments d'adresse (22) sont associés dynamiquement au bloc d'adresse (20), les éléments d'adresse (22) étant gérés et, en cas de besoin, générés par le gestionnaire de mémoire.

18. Procédé selon la revendication 16 et 17, **caractérisé en ce que** les blocs d'adresse (20) sont gérés et, en cas de besoin, générés par le gestionnaire de mémoire.

19. Procédé selon les revendications 16 à 18, **caractérisé en ce que** l'on insère dans les éléments d'adresse (22), en plus des références, des informations d'état sur le bloc d'adresse suivant (20) ou, s'il s'agit d'une feuille de l'arbre d'adresses, des informations d'objets.

20. Procédé selon les revendications 16 à 19, **caractérisé en ce que**, dans le cas où les informations d'objets dans une partie d'arbre inférieure sont identiques pour tous les objets, toute la partie d'arbre inférieure de l'arbre d'adresses est supprimée par le gestionnaire de mémoire, et une information correspondante est mémorisée dans l'élément d'adresse (22) du bloc d'adresse (20) hiérarchiquement supérieur à la partie d'arbre inférieure de l'arbre d'adresses.

21. Procédé selon les revendications 16 à 20, **caractérisé en ce que** les éléments d'adresse non occupés (22) dans un bloc d'adresse (20) sont concaténés entre eux, et un pointeur d'élément d'adresse (24) pointe le premier élément d'adresse non occupé, supprime un élément d'adresse (22) de la concaténation lorsque cet élément d'adresse est occupé et insère cet élément d'adresse dans la concaténation lors de la libération (27).

22. Procédé selon la revendication 21, **caractérisé en ce que** la concaténation des éléments d'adresse (22) est effectué selon le procédé LIFO.

23. Procédé selon les revendications 21 et 22, **caractérisé en ce que**, lorsque l'on recherche une adresse d'objet libre, on choisi l'adresse d'objet pointée par le pointeur d'adresse.
